# EUROPÄISCHE PATENTSCHRIFT

(11) **EP 1 361 634 B1**
(45) Veröffentlichungstag und Bekanntmachung des Hinweises auf die Patenterteilung: **28.03.2012**
(21) Anmeldenummer: 03008538.5
(22) Anmeldetag: 12.04.2003
(51) Int. Cl.: H02G 3/22

(54) **Elektrische Durchführung und Verwendung der elektrischen Durchführung**
Electrical leadthrough and use of the electrical leadthrough
Traversée électrique et utilisation de la traversée électrique

(30) Priorität: 07.05.2002 DE 10220478
(43) Veröffentlichungstag der Anmeldung: 12.11.2003
(73) Patentinhaber: AREVA NP GmbH, 91052 Erlangen (DE)
(72) Erfinder: Zuch, Gerhard, 90766 Fürth (DE)
(74) Vertreter: Tergau & Walkenhorst

(56) Entgegenhaltungen:
- JP-A- 56 039 494
- US-A- 3 803 531
- US-A- 3 909 500
- US-A- 4 142 937

## Beschreibung

Die Erfindung bezieht sich auf eine elektrische Durchführung mit einem von einem Mantelleiter umgegebenen Innenleiter gemäß dem Oberbegriff des Anspruchs 1. Sie betrifft weiter die Verwendung einer derartigen Durchführung.

Derartige Durchführungen, die üblicherweise auch als "Koaxial-Durchführungen" bezeichnet werden, werden üblicherweise verwendet, um elektrische Signale oder Impulse von einem ersten Raumbereich in einen zweiten, von diesem beispielsweise durch eine Wand oder eine Abschirmung getrennten Raumbereich zu übertragen. Die Wand oder Abschirmung kann dabei insbesondere eine Öffnung aufweisen, durch die die zur Weiterleitung des Signals oder Impulses vorgesehenen elektrischen Leitungen geführt sind, und die durch ein Flanschelement verschließbar ist. Im Bereich dieses Flanschelements sind dabei üblicherweise ein Innenleiter und ein diesen umgebender Mantelleiter vorgesehen, die das Flanschelement durchdringen und so eine elektrische Verbindung von einer ersten Seite des Flanschelements hin zur zweiten Seite des Flanschelements herstellen. Eine derartige Kabeldurchführung ist aus der JP 56 39494 A bekannt.

Derartige Durchführungen können insbesondere bedeutsam sein, wenn, beispielsweise zu Diagnose- oder Überwachungszwecken, die Ein- und/oder Ausleitung elektrischer Signale oder Impulse in den Innenraum eines eigentlich vollständig geschlossenen Behälters vorgesehen oder notwendig ist. Ein Beispiel für einer derartige Anwendung ist das sogenannten TDR-Messprinzip (timedomain-reflectometry), das zur Bestimmung oder Überwachung der Position einer Grenzschicht zwischen zwei Medien, insbesondere zur Ermittlung eines Füllstands, in einem Behälter eingesetzt werden kann. Das TDR-Messprinzip ist beispielsweise in der DE 199 585 84 C1 oder in der US 4,786,857 beschrieben.

Bei diesem Messprinzip, das insbesondere dann zum Einsatz kommt, wenn der Behälter auf sonstige Weise nicht einsehbar ist und somit der Positionskennwert der Grenzschicht oder des Füllstands nicht direkt bestimmbar ist, wird der Effekt genutzt, dass ein in einem Antennensystem geführter elektromagnetischer Impuls teilweise reflektiert wird, wenn sich die Impedanz zwischen beispielsweise einem Zentralleiter der Antenne und einem diesen in der Art eines Koaxialkabels umgebenden Mantelleiter abrupt ändert. Eine derartige abrupte Änderung der Impedanz tritt beispielsweise dort ein, wo die solchermaßen gebildete Antenne aus einer gasförmigen Umgebung in eine Flüssigkeit eintaucht, da die Impedanz von der Kapazität zwischen Zentralleiter oder Innenleiter und Mantelleiter und somit von der dielektrischen Konstanten des den Zwischenraum zwischen Zentralleiter und Mantelleiter ausfüllenden Mediums abhängt. Ein einer derartigen, in das zu überwachende Medium getauchten Antenne zugeführter elektromagnetischer Impuls wird somit an der Oberfläche des Mediums teilweise reflektiert. Eine weitere Reflexion tritt am üblicherweise kurzgeschlossenen Antennenende ein. Da im übrigen die Ausbreitungsgeschwindigkeit des elektromagnetischen Impulses in der Antenne bekannt ist, kann die Laufzeitdifferenz zwischen dem an der Grenzschicht reflektierten Impuls und dem am Antennenende reflektierten Impuls als Maß für die Lage der Grenzschicht und somit als Mittel zur Ermittlung eines für die Lage der Grenzschicht charakteristischen Positionskennwerts herangezogen werden, wobei eine im Wesentlichen proportionale Abhängigkeit zwischen Laufzeitdifferenz und Positionskennwert zugrunde gelegt werden kann.

Um dieses Verfahren zur Diagnose oder Überwachung beispielsweise eines Mediums in einem geschlossenen Behälter anwenden zu können, ist somit die Übertragung von elektromagnetischen Impulsen vom Außenbereich in den Innenraum des Behälters und umgekehrt erforderlich. Andererseits kann es jedoch je nach Art und Eigenschaften des im Behälter vorgehaltenen Mediums zwingend erforderlich oder zumindest von großer Bedeutung sein, ein besonders hohes Maß an Dichtigkeit des Behälters sicherzustellen. Je nach den auslegungsgemäß im Behälter vorherrschenden Betriebsparametern, wie beispielsweise Druck und Temperatur des dort vorgehaltenen Mediums, sind somit im Einzelfall besonders hohe Anforderungen an die zur Ein- und Ausleitung elektromagnetischer Impulse verwendete elektrische Durchführung zu stellen. Dies kann dazu führen, dass beispielsweise das TDR-Messprinzip unter gewissen Umständen und für gewisse Medien überhaupt nicht anwendbar ist.

Der Erfindung liegt daher die Aufgabe zugrunde, eine elektrische Durchführung der oben genannten Art anzugeben, die auch für eine Verwendung an einem Behälter geeignet ist, in dem auslegungsgemäß vergleichsweise hohe Drücke und/oder hohe Temperaturen herrschen können.

Diese Aufgabe wird erfindungsgemäß gelöst durch die Merkmale des kennzeichnenden Teils von Anspruch 1.

Unter "Flanschelement" ist hierbei im allgemeinen ein Wandstück oder dergleichen zu verstehen, das insbesondere mobil ausgebildet ist und in der Art eines Deckels oder Stopfens zum Verschließen einer Öffnung vorgesehen ist. Beispielsweise kann es sich dabei auch um einen Sonden- oder Lanzenkopf der Kerninstrumentisierung eines Kernkraftwerks handeln.

Die Erfindung geht dabei von der Überlegung aus, dass für eine zuverlässige Anwendbarkeit der Durchführung auch an einem Behälter, in dessen Innenraum vergleichsweise extreme Betriebsbedingungen vorliegen können, besonders hohe Anforderungen hinsichtlich der Dichtigkeit bei der eigentlichen Durchführung erfüllt sein sollten. Hinsichtlich des durch das Flanschelement geführten Mantelleiters ist dies vergleichsweise weniger problematisch, da dieser durchgehend im Querschnitt mit dem Flanschelement verbunden und insbesondere mit diesem einstückig ausgeführt sein kann. Besondere Sorgfalt ist jedoch bei der Durchführung des Innenleiters durch das Flanschelement geboten, da für den Innenleiter für eine verzerrungs- und fehlerfreie Übertragung der elektromagnetischen Impulse eine elektrischer Kontakt mit dem Flanschelelement oder dem Außenleiter zuverlässig vermieden werden soll. Da eine derartige zuverlässige elektrische Isolation zwischen Innenleiter und Flanschelement bzw. Mantelleiter notwendigerweise mit der Bildung von Luftspalten oder offenen Raumbereichen einhergeht, ist gerade in diesem Bereich eine zuverlässige Abdichtung besonders bedeutsam. Für eine zuverlässige Abdichtung ist in der Regel eine Auffüllung der entstehenden Luft- oder Raumbereiche mit einem formbaren Dichtmittel oder durch andere fließende Techniken wie beispielsweise Löten vorgesehen. Um jedoch auch bei vergleichsweise extremen Betriebsparametern eine zuverlässige Dichtigkeit des Systems zu gewährleisten, ist unter Abkehr von der Verwendung fließender Dichtmittel der Einsatz von Dichtungen auf mechanischer Basis vorgesehen.

Eine besonders gute Dichtwirkung ist dabei erzielbar, indem die Dichtringe eine geeignet gewählte Verformbarkeit bei Beaufschlagung mit äußerer Kraft aufweisen. Dies ist bei gleichzeitig besonders hoher Temperaturbeständigkeit der Dichtung insgesamt erreichbar, indem als Dichtringe Metalldichtringe vorgesehen sind. Dabei kann es sich insbesondere um vergoldete Edelstahl-Ringe handeln.

Beim Einsatz einer derartigen elektrischen Durchführung ist auch unter variierenden Betriebsbedingungen eine sorgfältige Isolierung des durch das Flanschelement geführten Innenleiters vom Flanschelement und/oder vom Mantelleiter erforderlich. Um dieses zu gewährleisten, sollte der Innenleiter gerade im Bereich seiner Durchführung durch das Flanschelement in besonderer Weise räumlich fixiert sein. Dazu ist der Innenleiter im Bereich seiner Durchführung durch das Flanschelement vorgespannt. Die Mittel zur Aufbringung der Vorspannung sind dabei in weiterer vorteilhafter Ausgestaltung kraftseitig über eine Anzahl von Keramikringen am Flanschelement abgestützt, so dass in besonders zuverlässiger Weise die Isolierung des Innenleiters vom Flanschelement gewährleistet ist.

Die elektrische Durchführung ist zweckmäßigerweise in besonderem Maße für eine Anwendung in einem sogenannten TDR-Messsystem ausgestaltet. Bei einem derartigen Messsystem ist von besonderer Bedeutung, dass die über die elektrische Durchführung vom Außenraum des jeweiligen Behälters in dessen Innenraum übermittelten elektromagnetischen Impulse in möglichst geringem Umfang an der Durchführung selbst reflektiert werden. Um dies zu gewährleisten, sind der Mantelleiter und der Innenleiter der elektrischen Durchführung vorteilhafterweise in ihrem Querschnitt abhängig von der jeweiligen Position in Längsrichtung des Innen- bzw. Mantelleiters jeweils derart dimensioniert, dass die Impedanz des von ihnen gebildeten Leitersystems in Richtung ihrer jeweiligen Längsachse im Wesentlichen konstant ist.

Vorteilhafterweise wird die elektrische Durchführung in einem Messsystem zur Ermittlung eines Positionkennwerts einer Grenzschicht nach der TDR-Methode verwendet. In besonders vorteilhafter Ausgestaltung ist dabei die Verwendung der elektrischen Durchführung in einem TDR-Messsystem zur Ermittlung des Füllstands in einem Reaktordruckbehälter einer kerntechnischen Anlage vorgesehen. Gerade in einem derartigen Reaktordruckbehälter können nämlich besonders hohe Drücke und Temperaturen herrschen, so dass der Einsatz eines TDR-Messsystems zur Füllstandsüberwachung nur eingeschränkt möglich ist. Die Verwendung der nunmehr vorgesehenen elektrischen Durchführung ermöglicht somit überhaupt erst den Einsatz des TDR-Messprinzips zur Füllstandsüberwachung im Reaktordruckbehälter in dessen sämtlichen Betriebspunkten.

Die mit der Erfindung erzielten Vorteile bestehen insbesondere darin, dass durch die Verwendung mechanischer Dichtelemente bei der Abdichtung der Durchführung des Innenleiters eine besonders hohe Temperatur- und Druckbeständigkeit der elektrischen Durchführung insgesamt erreichbar ist. Durch die Aufbringung einer geeigneten Vorspannung, insbesondere in Kombination mit den hierbei verwendeten Keramikringen, ist auch bei variierenden Temperaturoder Druckverhältnissen die Einhaltung einer hohen Dichtigkeit der Durchführung gewährleistet, ohne dass Beeinträchtigungen bei der Isolationswirkung des Innenleiters gegenüber dem Flanschelement oder dem Mantelleiter auftreten. Die elektrische Durchführung ist somit aufgrund ihrer vergleichsweise hohen Temperatur- und Druckbeständigkeit in besonderem Maße für die Verwendung in einem TDR-Messverfahren, insbesondere bei der Überwachung von Betriebsparametern in einem Behälter in vergleichsweise extremen Bedingungen wie beispielsweise bei der Füllstandsüberwachung in einem Reaktordruckbehälter, geeignet.

Ein Ausführungsbeispiel der Erfindung wird anhand einer Zeichnung näher erläutert. Darin zeigen:
- Figur 1: schematisch ein System zur Überwachung des Füllstands in einem geschlossenen Reaktordruckbehälter, und
- Figur 2: eine elektrische Durchführung im Längsschnitt.

Gleiche Teile sind in beiden Figuren mit den selben Bezugszeichen versehen.

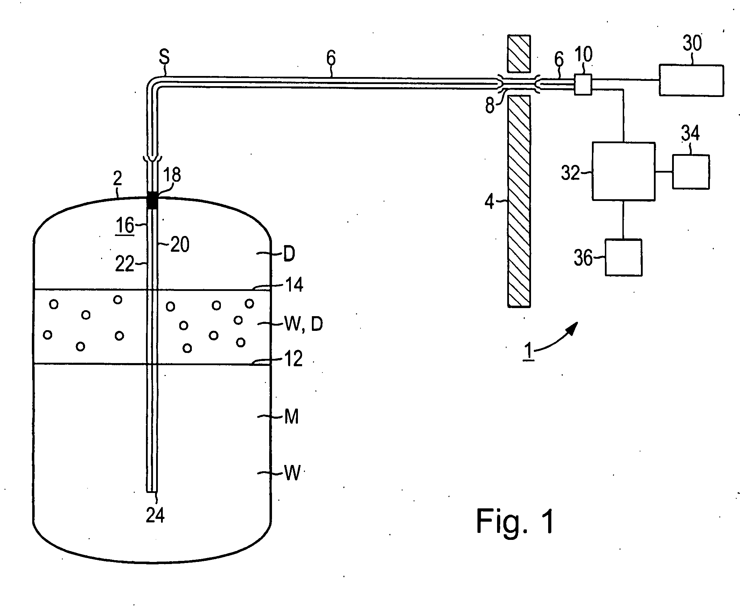

Das System 1 nach Figur 1 ist zur Überwachung eines Mediums M innerhalb des angeschlossen Reaktordruckbehälters 2 einer kerntechnischen Anlage vorgesehen. Der Reaktordruckbehälter 2 ist innerhalb eines geschlossen ausgeführten und in Figur 1 lediglich andeutungsweise gezeigten Containments 4 angeordnet. Zum geeigneten Austausch von Signalen S ist der Reaktordruckbehälter 2 über eine Signalleitung 6, die über eine Durchführung 8 durch das Containment 4 geführt ist, mit einer Kommunikationsschnittstelle 10 des Systems 1 verbunden.

Als Medium M ist im Ausführungsbeispiel im Reaktordruckbehälter 2 Wasser W vorgehalten, das als Primärkühlmittel der kerntechnischen Anlage dient. In einem unteren Raumbereich liegt das Wasser W im sogenannten unterkühlten Zustand unvermischt vor. In einem darüberliegenden Raumbereich, in dem eine Beheizungswirkung der im Reaktordruckbehälter 2 angeordneten nuklearen Brennelemente vorliegt, befindet sich hingegen ein Phasengemisch W, D zwischen Wasser W und sich darin bildenden Dampfblasen D. In einem noch weiter darüber liegenden Bereich liegt hingegen ausschließlich verdampftes Primärkühlmittel, also ausschließlich Dampf D, vor. Das im Behälter 2 vorgehaltene Medium M weist somit eine erste Grenzschicht 12 zwischen dem Wasser W und dem Phasengemisch W, D und eine zweite Grenzschicht 14 zwischen dem Phasengemisch W, D und dem Dampf D auf.

Beim Betrieb der kerntechnischen Anlage ist die Überwachung einer großen Vielzahl von Betriebsparametern vorgesehen. Unter anderem kann es dabei auch wünschenswert oder erforderlich sein, die Lage der Grenzschichten 12, 14 zu überwachen. Beispielsweise kann dabei die Überwachung der Grenzschicht 14, deren Lage auch als "swell level" bezeichnet wird, über eine Füllstandsmessung erfolgen.

Das System 1 ist zur zeitnahen Ermittlung und Überwachung von Positionskennwerten der Grenzschichten 12, 14 vorgesehen. Dazu ist das System 1 für eine Nutzung des sogenannten TDR-Messprinzips (time-domain-reflectometry) ausgestaltet. Für eine derartige TDR-Messung ist innerhalb des Reaktordruckbehälters 2 eine in im Wesentlichen senkrechter Richtung angeordnete Antenne 16 vorgesehen. Die Antenne 16, die über eine elektrische Durchführung 18 aus dem Reaktordruckbehälter 2 herausgeführt und an die Signalleitung 6 angeschlossen ist, ist dabei in der Art einer Koaxialantenne aufgebaut. Sie umfasst einen Zentralleiter 20, der in der Art eines Koaxialkabels konzentrisch von einem im Wesentlichen zylindermantelförmig ausgestalteten Mantelleiter 22 umgeben ist. Der Mantelleiter 22 ist dabei durchbrochen oder perforiert ausgeführt und weist eine Vielzahl von in der Darstellung nicht erkennbaren Ausgleichsöffnungen auf.

Dadurch ist sichergestellt, dass das Medium M in den Zwischenraum zwischen Zentralleiter 20 und Mantelleiter 22 eindringen kann. Am Antennenende 24 sind der Zentralleiter 20 und der Mantelleiter 22 kurzgeschlossen.

Bei der Verwendung einer derartigen Antenne 16 zur Positionsbestimmung der Grenzschichten 12, 14 wird der Effekt genutzt, dass die Impedanz der Antenne 16 lokal von der jeweiligen Kapazität zwischen Zentralleiter 20 und Mantelleiter 22 abhängt. Die Impedanz ist somit über die Kapazität abhängig von der Dielektrizitätkonstante desjenigen Mediums M, das den Zwischenraum zwischen Zentralleiter 20 und Mantelleiter 22 ausfüllt. Beim Durchtritt durch eine der Grenzschichten 12, 14 ändert sich infolgedessen die lokale Impedanz der Antenne 16 abrupt. Bei einer derartigen, abrupten Impedanzänderung wird ein in der Antenne 16 geführter elektromagnetischer Impuls teilweise transmittiert und teilweise reflektiert. Somit hinterlässt ein derartiger, in der Antenne 16 geführter elektromagnetischer Impuls an jeder Grenzschicht 12, 14 einen reflektierten Impuls, der als charakteristische Signatur auswertbar ist. Insbesondere kann die Laufzeitdifferenz zwischen einem an einer der Grenzschichten 12, 14 reflektierten Impuls und einem am Antennenende 24 reflektierten Impuls genutzt werden, um unter Berücksichtigung der Ausbreitungsgeschwindigkeit elektromagnetischer Signale im jeweiligen Segment der Antenne 16 einen Kennwert für die Position der jeweiligen Grenzschicht 12 bzw. 14 relativ zum Antennenende 24 und somit einen Kennwert beispielsweise für den Füllstand des Mediums M innerhalb des Reaktordruckbehälters 2 zu ermitteln.

Um derartige Positionsbestimmungen der Grenzflächen 12, 14 nach dem TDR-Messprinzip durchführen zu können, ist das über die als abgeschirmte Leitung ausgeführte Signalleitung 6 mit der Antenne 16 verbundene System 1 mit geeigneten Komponenten ausgestattet. Insbesondere umfaßt das System 1 einen Pulsgenerator 30 zur bedarfsweisen Erzeugung eines elektromagnetischen Impulses. Der Pulsgenerator 30 ist über Kommunikationsschnittstelle 10 mit der Signalleitung 6 verbunden, so dass ein vom Pulsgenerator 30 erzeugter elektrischer Impuls bedarfsweise der Antenne 16 zuführbar ist. Des Weiteren umfasst das System 1 eine ebenfalls an die Kommunikationsschnittstelle 10 angeschlossene Auswerte- und Steuereinheit 32, die einerseits mit einem Speichermodul 34 und andererseits mit einem Ausgabemodul 36, im Ausführungsbeispiel ein Bildschirm, verbunden ist. Selbstverständlich ist die Auswerte- und Steuereinheit 32 noch mit weiteren, für einen ordnungsgemäßen Betrieb erforderlichen Komponenten wie beispielsweise einer Eingabevorrichtung verbunden.

Zur Durchführung der Bestimmung eines Positionskennwerts nach dem TDR-Prinzip wird ein im Pulsgenerator 30 erzeugter Impuls der im Innenraum des Reaktordruckbehälters 2 angeordneten Antenne 16 zugeführt. Anschließend werden zeitaufgelöst eine Anzahl von über die Antenne 16 empfangenen reflektierten Impulsen gemessen. Dabei wird in einem durch den zeitlichen Verlauf der Impulse gebildeten Antwortsignal ein der Grenzschicht 12 oder 14 zugeordneter reflektierter Impuls identifiziert und für die Positionsbestimmung aus einer Laufzeitmessung zugrunde gelegt.

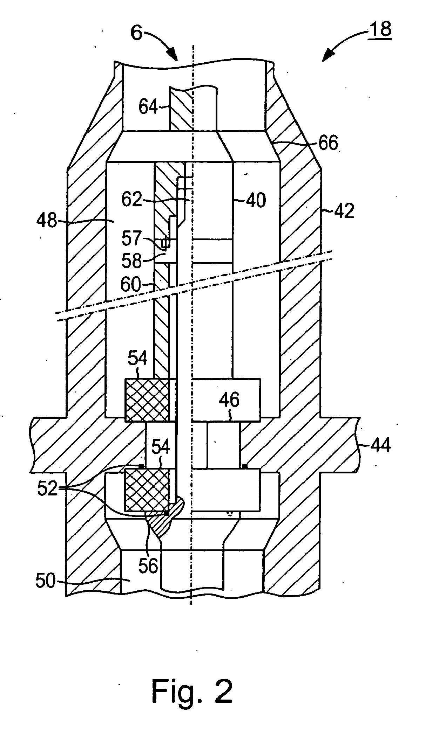

Die elektrische Durchführung 18, die in Figur 2 im Längsschnitt gezeigt ist, ist spezifisch auf die Anwendbarkeit in einem TDR-Messsystem für den Reaktordruckbehälter 2 der kerntechnischen Anlage ausgestaltet. Dazu ist die elektrische Durchführung 18, die ihrerseits in der Art einer Koaxialdurchführung einen Innenleiter 40 und einen diesen konzentrisch umgebenden Mantelleiter 42 umfasst, einerseits für eine besonders hohe Dichtigkeit auch bei wechselnden oder besonders extremen Druckverhältnissen im Inneren des Reatkordruckbehälters 2 ausgelegt.

Der Mantelleiter 42 und der von ihm umschlossene Innenleiter 40 sind durch ein Flanschelement 44 durchgeführt, das seinerseits auf eine korrespondierende, in ihrer Dimensionierung entsprechend angepasste Öffnung im Reaktordruckbehälter 2 dicht schließend aufsetzbar ist. Der Mantelleiter 42 ist dabei im Ausführungsbeispiel einstückig mit dem Flanschelement 44 ausgebildet, so dass beim Einsatz dieser Komponenten keinerlei Dichtungsprobleme zu erwarten sind. Alternativ kann der Mantelleiter 42 aber auch beispielsweise verdickt oder auf sonstige Weise geeignet geformt sein, um direkt in der Art eines Stopfens oder einer Einschraubung eine zugeordnete Öffnung im Reaktordruckbehälter druckdicht zu verschließen. Für den Innenleiter 40 ist für eine fehler- und störungsfreie Übertragung der elektromagnetischen Impulse durchgängig auf eine zuverlässige Isolierung vom Mantelleiter 42 und vom mit diesem verbundenen Flanschelement 44 zu achten. Der Innenleiter 40 ist daher unter Bildung eines umlaufenden Luftspalts derart durch eine Öffnung 46 im Flanschelement 44 hindurchgeführt, dass ein elektrischer Kontakt zwischen dem Innenleiter 40 und dem Flanschelement 44 durchgängig vermieden ist.

Diese Anordnung könnte jedoch zu Undichtigkeiten zwischen einem auf einer ersten, im Ausführungsbeispiel mit der Außenseite des Reaktordruckbehälters 2 korrespondierenden Seite des Flanschelements 44 vom Innenleiter 40 und vom ihm umgebenden Mantelleiter 42 gebildeten ersten Raumbereich 48 und einem auf einer zweiten, im Ausführungsbeispiel mit der Innenseite des Reaktordruckbehälters 2 korrespondierenden zweiten Seite des Flanschelements 44 vom Innenleiter 40 und dem ihn umgebenden Mantelleiter 42 gebildeten zweiten Raumbereich 50 führen. Um derartige Undichtigkeiten konsequent auszuschließen und somit eine besonders hohe Dichtigkeit der elektrischen Durchführung 18 insgesamt zu gewährleisten, ist der erste Raumbereich 48 gegenüber dem zweiten Raumbereich 50 auf der Grundlage mechanischer Dichtelemente, nämlich mittels einer Anzahl von Dichtringen 52, abgedichtet.

Die Dichtringe 52 sind insbesondere hinsichtlich ihrer Materialwahl derart ausgestaltet, dass eine hohe Dichtwirkung bei gleichzeitig hoher Temperatur- und Druckbeständigkeit gewährleistet ist. Dazu sind die Dichtringe 52 als Metalldichtringe ausgebildet und bestehen im Ausführungsbeispiel aus vergoldetem Edelstahl.

Um einerseits die Dichtwirkung der Dichtringe 52 in besonderem Maße zu verstärken und andererseits eine zuverlässige räumliche Positionierung des Innenleiters 40 relativ zum Flanschelement 44 sicherzustellen und damit in jedem Fall eine ausreichende elektrische Isolierung zu gewährleisten, ist der Innenleiter 40 im Bereich seiner Durchführung durch das Flanschelement 44 vorgespannt, wobei die Mittel zur Vorspannung kraftseitig über einer Anzahl von Keramikringen 54 am Flanschelement 44 abgestützt sind. Auf der zur Innenseite des Reaktordruckbehälters 2 korrespondierenden zweiten Seite des Flanschelements 44 ist der Innenleiter 40 dazu nach außen hin aufgekragt, wobei eine umlaufende Nut zur Aufnahme eines der Dichtringe 52 gebildet ist. Der so gebildete Kragen 56 ist über die Dichtungsringe 52 und einen dazwischen liegenden Keramikring 54 an der Innenseite des Flanschelemente 44 abgestützt, so dass eine auf den Innenleiter 40 in seiner Längsrichtung wirkende Kraft über die Dichtringe 52 und den Keramikring 54 auf das Flanschelement 44 übertragen wird, ohne dass eine elektrische Verbindung zwischen Innenleiter 40 und Flanschelement 44 auftreten könnte. Auf der zur Außenseite des Reaktordruckbehälters 2 korrespondierenden ersten Seite des Flanschelements 44 weist der Innenleiter 40 hingegen an geeigneter Stelle ein in Figur 2 lediglich angedeutetes Gewinde 57 auf, auf dem eine Überwurfmutter 58 geführt ist. Die Überwurfmutter 58 ist ihrerseits kraftseitig über eine zum Innenleiter konzentrisch angeordnete Abstandshalterhülse 60 und einen weiteren Keramikring 54 an der Außenseite des Flanschelements 44 abgestützt. Durch geeignetes Festziehen der Überwurfmutter 58 ist somit eine Vorspannung des Innenleiters 40 im Bereich seiner Durchführung durch das Flanschelement 44 einstellbar. Bei geeignet gewählter Vorspannung erfolgt zudem in besonderem Maße ein Anpressen der Kontaktflächen an die Dichtringe 52, so dass durch die Aufbringung der Vorspannung eine besonders hohe Dichtwirkung, gegebenenfalls durch leichte Verformung der Dichtringe 52, erreichbar ist.

In seinem Bereich jenseits der Überwurfmutter 58 geht der Innenleiter 40 über einen gleitend gelagerten Endzapfen 62 in einen Zentralleiter 64 der Signalleitung 6 über. Der Mantelleiter 42 kann in diesem Raumbereich durch geeignete Mittel, beispielsweise ebenfalls eine Überwurfmutter, mit dem Mantelleiter der Signalleitung 6 verbunden sein.

Über die Sicherstellung einer besonders hohen Dichtigkeit hinaus ist die elektrische Durchführung 18 andererseits auch für besonders gering gehaltene Reflexionen beim Durchtritt elektrischer Signale oder Impulse von der ersten Seite des Flanschelements 44 zu dessen zweiter Seite oder umgekehrt ausgestaltet. Dazu sind die Komponenten der elektrischen Durchführung 18, also insbesondere der Innenleiter 40, der Mantelleiter 42, die Öffnung 46 und die Keramikringe 54, in ihrem Querschnitt jeweils derart dimensioniert, dass die Impedanz des von ihnen gebildeten Leitersystems in Richtung der Längsachsen von Innenleiter 40 und Mantelleiter 42 im Wesentlichen konstant ist. Bei der Dimensionierung dieser Komponenten wird die Erkenntnis genutzt, dass die Impedanz in einem koaxialen Leitersystem mit einer Mehrzahl von Komponenten im Wesentlichen abhängig ist vom Durchmesser der jeweiligen Komponenten und von der Dielektrizitätskonstanten des die jeweiligen Zwischenräume auffüllenden Mediums. Beispielsweise liegt im Bereich der Durchführung 46 ein koaxiales System gebildet aus dem Innenleiter 40, der Innenwand des Flanschelements 44 und dem dazwischen liegenden ringförmigen Luftspalt vor. In diesem Bereich ist die Impedanz des Leitersystems somit im Wesentlichen gegeben durch den Außendurchmesser d des Innenleiters 40, den Durchmesser D der Öffnung 46 und dielektrischen Konstante des den Luftspalt auffüllenden Mediums, also von Luft. Im direkt darüber- bzw. darunter befindlichen Raumbereich ist die lokale Impedanz des Leitersystems hingegen gegeben durch den Außendurchmesser d des Innenleiters 40, den Außendurchmesser des diesen umgebenden Keramikrings 54 unter Berücksichtigung von dessen dielektrischer Konstante ∈, den Innendurchmesser D₂ des Mantelleiters 42 und der Dielektrizitätskonstanten von Luft im Bereich des Raumspalts zwischen dem Keramikring 54 und dem Mantelleiter 42.

In jedem Raumbereich sind die jeweiligen Durchmesser der einzelnen Komponenten unter Berücksichtigung der jeweils einschlägigen dielektrischen Konstanten derart gewählt, dass die resultierende Impedanz in Längsrichtung des Innenleiters 40 nahezu konstant ist. Um dabei ausreichend Platz für die Anbringung der mechanischen Komponenten im Bereich der Durchführung durch das Flanschelement 44 bereitzustellen, sind der Innenleiter 40 und der Mantelleiter 42 in der Nähe des Flanschelements 44, wie dies in Figur 2 erkennbar ist, im Vergleich zur Dimensionierung der eigentlichen Signalleitung 6 in ihren Querschnitten jeweils aufgeweitet. Die Aufweitung der Querschnitte, insbesondere im Bereich 66 konischer Querschnittsführung, ist dabei derart ausgeführt, dass auch trotz der Änderung der geometrischen Verhältnisse die Impedanz unverändert bleibt.

Bedarfsweise kann die Durchführung 8 nach der gleichen Weise ausgestaltet sein wie die Durchführung 18.

### Bezugszeichenliste

- 1.: System
- 2.: Reaktordruckbehälter
- 4.: Containment
- 6.: Signalleitung
- 8.: Durchführung
- 10.: Kommunikationsschnittstelle
- 12.: Grenzschicht
- 14.: Grenzschicht
- 16.: Antenne
- 18.: elektrische Durchführung
- 20.: Zentralleiter
- 22.: Mantelleiter
- 24.: Antennenende
- 30.: Pulsgenerator
- 32.: Auswerte- und Steuereinheit
- 34.: Speichermodul
- 36.: Ausgabemodul
- 40.: Innenleiter
- 42.: Mantelleiter
- 44.: Flanschelement
- 46.: Öffnung
- 48.: erster Raumbereich
- 50.: zweiter Raumbereich
- 52.: Dichtringe
- 54.: Keramikringe
- 56.: Kragen
- 57.: Gewinde
- 58.: Überwurfmutter
- 60.: Abstandshalterhülse
- 62.: End zapfen
- 64.: Zentralleiter
- D: Dampf/ Dampfblasen
- D, W: Phasengemisch
- M: Medium
- W: Wasser

## Patentansprüche

1. Elektrische Durchführung (18) mit einem von einem Mantelleiter (42) umgebenen Innenleiter (40), die gemeinsam durch ein Flanschelement (44) geführt sind, wobei ein auf einer ersten Seite des Flanschelements (44) vom Innenleiter (40) und dem ihn umgebenden Mantelleiter (42) gebildeter erster Raumbereich (48) gegenüber einem auf einer zweiten Seite des Flanschelements (44) vom Innenleiter (40) und dem ihn umgebenden Mantelleiter (42) gebildeten zweiten Raumbereich (50) mittels einer Anzahl von Dichtringen (52) abgedichtet ist,
**dadurch gekennzeichnet, dass**
die Dichtringe (52) als Metalldichtringe ausgebildet sind, und dass der Innenleiter (40) im Bereich seiner Durchführung durch das Flanschelement (44) vorgespannt ist.

2. Elektrische Durchführung nach Anspruch 1, bei dem die Mittel zur Aufbringung der Vorspannung kraftseitig über eine Anzahl von Keramikringen (54) am Flanschelement (44) abgestützt sind.

3. Elektrische Durchführung nach Anspruch 1 oder 2, bei der der Mantelleiter (42) und der Innenleiter (40) in ihrem Querschnitt jeweils derart dimensioniert sind, dass die Impedanz des von ihnen gebildeten Leitersystems in Richtung ihrer jeweiligen Längsachse im Wesentlichen konstant ist.

4. Verwendung einer elektrischen Durchführung (18) nach einem der Ansprüche 1 bis 3 in einem Messsystem zur Ermittlung eines Positionskennwerts einer Grenzschicht (12, 14) nach der TDR-Methode.

5. Verwendung einer elektrischen Durchführung (18) nach einem der Ansprüche 1 bis 3 in einem TDR-Messsystem zur Ermittlung des Füllstands in einem Reaktordruckbehälter einer kerntechnischen Anlage.

6. Verwendung einer elektrischen Durchführung (18) nach einem der Ansprüche 1 bis 3 zur Weiterleitung eines Messimpulses durch eine druckdichte Wand, insbesondere durch das Containment (4) einer kerntechnischen Anlage.

## Claims

1. An electrical leadthrough (18) having in inner conductor (40) enclosed by an outer conductor (42), led together through a flange element (44), whereby a first spatial region (48) formed on a first side of the flange element (44) by the inner conductor (40) and the outer conductor (42) enclosing it is sealed, by means of several sealing rings (52), against a second spatial region (50) formed on a second side of the flange element (44) by the inner conductor (40) and the outer conductor (42) enclosing it,
**characterized in that**
the sealing rings (52) are executed as metallic sealing rings and that the inner conductor (40) is prestressed, in the region of its leadthrough, by the flange element (44).

2. The electrical leadthrough of claim 1, wherein the means for producing the prestress are supported on the flange element (44), on the force side, by several ceramic rings (54).

3. The electrical leadthrough of claim 1 or 2, wherein the cross-sections of the outer conductor (42) and the inner conductor (40) are dimensioned such that the impedance of the conductor system formed by them is substantially constant in the direction of their respective longitudinal axes.

4. Use of an electrical leadthrough (18) according to any to claims 1 to 3 in a measuring system for determining a position parameter of a boundary layer (12, 14) according to the TDR method.

5. Use of an electrical leadthrough (18) according to any to claims 1 to 3 in a TDR measuring system for determining the filling level in a reactor pressure vessel of a nuclear power plant.

6. Use of an electrical leadthrough (18) according to any to claims 1 to 3 for transmitting a measuring pulse through a pressure-tight wall, in particular through the containment (4) of a nuclear power plant.

## Revendications

1. Traversée électrique (18) avec un conducteur interne (40) entouré par un conducteur gaine (42), qui sont guidés en commun à travers un élément de bride (44), dans laquelle une première zone spatiale (48) formée sur un premier côté de l'élément de bride (44) par le conducteur interne (40) et le conducteur gaine (42) entourant celui-ci, est rendu étanche, au moyen de plusieurs bagues d'étanchéité (52), contre une deuxième zone spatiale (50) formée sur un deuxième côté de l'élément de bride (44) par le conducteur interne (40) et le conducteur gaine (42) entourant celui-ci,
**caractérisée en ce que**
les bagues d'étanchéité (52) sont exécutées comme des bagues d'étanchéité métalliques et **en ce que** le conducteur interne (40) est précontraint, dans la zone de sa traversée, par l'élément de bride (44).

2. Traversée électrique selon la revendication 1, dans laquelle les moyens pour produire la précontrainte s'appuyent sur l'élément de bride (44), du côté de force, moyennant plusieurs bagues en céramique (54).

3. Traversée électrique selon la revendication 1 ou 2, dans laquelle les sections du conducteur gaine (42) et du conducteur interne (40) sont dimensionnées de telle façon que l'impédance du système de conducteurs formé par ceux-ci est essentiellement constante dans la direction de leurs axes longitudinales respectives.

4. Utilisation d'une traversée électrique (18) selon l'une quelconque des revendications 1 à 3 dans un système de mesure pour déterminer un paramètre de position d'une couche limite (12, 14) selon la méthode TDR.

5. Utilisation d'une traversée électrique (18) selon l'une quelconque des revendications 1 à 3 dans un système de mesure TDR pour déterminer le niveau de remplissage dans un caisson sous pression d'un réacteur d'une installation nucléaire.

6. Utilisation d'une traversée électrique (18) selon l'une quelconque des revendications 1 à 3 pour transmettre une impulsion de mesure à travers un mur étanche à la pression, en particulier à travers le confinement (4) d'une installation nucléaire.
